# EUROPEAN PATENT APPLICATION

(11) **EP 4 668 818 A1**
(43) Date of publication of application: **24.12.2025**
(21) Application number: 24183498.5
(22) Date of filing: 20.06.2024
(51) Int. Cl.: H04W 12/30, H04W 8/20

(54) **METHOD FOR SUPPORTING A PROFILE DOWNLOAD**

(71) Applicant: NXP B.V., 5656 AG Eindhoven (NL)
(72) Inventor: Nitsch, Nils Frederik, 5656 AG Eindhoven (NL)
(74) Representative: Krott, Michel

(57) **Abstract**

In accordance with a first aspect of the present disclosure, a method for supporting a profile download is conceived, comprising that: a first profile delivery server receives, from a user device, a request for downloading a profile on a secure element embedded in the user device, wherein said request comprises authentication capability information; the first profile delivery server determines, based on said authentication capability information, whether the secure element is capable of authenticating the first profile delivery server; the first profile delivery server retrieves, upon or after determining that the secure element is not capable of authenticating the first profile delivery server, an authentication token from a second profile delivery server, and transmits said authentication token to the user device. In accordance with a second aspect of the present disclosure, a corresponding first profile delivery server is provided.

## Description

### TECHNICAL FIELD

The present disclosure relates to a method for supporting a profile download. Furthermore, the present disclosure relates to a corresponding first profile delivery server, and to a corresponding system for supporting a profile download.

### BACKGROUND

Some communication devices, such as smart phones, typically contain one or more secure elements. An example of such a secure element is a so-called embedded universal integrated circuit card (eUICC), which may be an embedded functional component that implements the same functionality as a traditional, removable subscriber identity module (SIM). Accordingly, a secure element may for example be a functional component (e.g., a component primarily implemented as software) that is installed in an embedded chip, more specifically in a tamper-resistant integrated circuit having a prescribed level of security. A secure element may implement security functions, such as cryptographic functions and authentication functions. Furthermore, a profile may be stored in a secure element, in order to enable the aforementioned functionality.

### SUMMARY

In accordance with a first aspect of the present disclosure, a method for supporting a profile download is conceived, comprising that: a first profile delivery server receives, from a user device, a request for downloading a profile on a secure element embedded in the user device, wherein said request comprises authentication capability information; the first profile delivery server determines, based on said authentication capability information, whether the secure element is capable of authenticating the first profile delivery server; the first profile delivery server retrieves, upon or after determining that the secure element is not capable of authenticating the first profile delivery server, an authentication token from a second profile delivery server, and transmits said authentication token to the user device.

In one or more embodiments, the authentication capability information is indicative of a root certificate assigned to the secure element.

In one or more embodiments, the authentication token comprises a root certificate assigned to the second profile delivery server.

In one or more embodiments, the authentication token further comprises a signature computed by the second profile delivery server, wherein said signature has been computed over authentication data provided by the first profile delivery server.

In one or more embodiments, the authentication token is based on a unique identifier of the profile.

In one or more embodiments, the secure element verifies the authentication token and approves, upon or after a successful verification of the authentication token, the download of the profile from the first profile delivery server.

In one or more embodiments, the first profile delivery server initiates, upon or after determining that the secure element is capable of authenticating the first profile delivery server, an authentication process that uses the root certificate assigned to the secure element.

In one or more embodiments, the secure element is an embedded universal integrated circuit card (eUICC).

In accordance with a second aspect of the present disclosure, a first profile delivery server is provided, comprising: a receiving unit configured to receive, from a user device, a request for downloading a profile on a secure element embedded in the user device, wherein said request comprises authentication capability information; a processing unit configured to determine, based on said authentication capability information, whether the secure element is capable of authenticating the first profile delivery server; a retrieving unit configured to retrieve, upon or after determining that the secure element is not capable of authenticating the first profile delivery server, an authentication token from a second profile delivery server; a transmitting unit configured to transmit said authentication token to the user device.

In one or more embodiments, the authentication capability information is indicative of a root certificate assigned to the secure element.

In one or more embodiments, the authentication token comprises a root certificate assigned to the second profile delivery server.

In one or more embodiments, the authentication token further comprises a signature computed by the second profile delivery server, wherein said signature has been computed over authentication data provided by the first profile delivery server.

In one or more embodiments, the authentication token is based on a unique identifier of the profile.

In one of more embodiments, a system for supporting a profile download comprises a first profile delivery server of the kind set forth, a second profile delivery server and a user device.

In one or more embodiments, a secure element embedded in the user device is configured to verify the authentication token and to approve, upon or after a successful verification of the authentication token, the download of the profile from the first profile delivery server.

### DESCRIPTION OF DRAWINGS

Embodiments will be described in more detail with reference to the appended drawings.
Fig. 1 shows an example of a profile download authorization process.
Fig. 2 shows an illustrative embodiment of a method for supporting a profile download.
Fig. 3 shows an illustrative embodiment of a first profile delivery server.
Fig. 4 shows an illustrative embodiment of a system for supporting a profile download.
Fig. 5 shows an illustrative embodiment of a profile download authorization process.

### DESCRIPTION OF EMBODIMENTS

Nowadays, removable SIMs are often replaced by so-called eUICCs. This fits into the trend of developing so-called embedded SIM (eSIM) technology, which transforms the traditional plastic SIM into an electronical dataset called "profile". A profile may be regarded as a collection of resources associated with a particular user. For example, a mobile network operator (MNO) may associate the profile with said user in its network and billing systems, upon contract establishment and when sending an eSIM, respectively. Specifically, a profile may include at least one of a file system, one or more network access credentials, one or more applications and data related to or operated upon by said applications. In operation, a communication device may for example retrieve access credentials contained in such a profile, with the purpose of connecting the communication device to a cellular network.

Instead of sending a SIM to a subscriber, eSIM allows an MNO to easily download and install a profile into a secure element (e.g., an eUICC) in a connected device (e.g., a mobile phone). Since there is a strong need that the MNO's data is protected both in terms of confidentiality and authenticity the entities involved in a profile download are typically certified and accredited using schemes defined by the GSM Association (GSMA). A successful accreditation includes obtaining certificates, issued by a GSMA-approved Certificate Authority (CA), which are used for a common mutual authentication between the eUICC and the profile delivery server (e.g., a so-called Subscription Manager Data Preparation Plus (SM-DP+) server). However, a drawback is that the CA certificates (i.e., root certificates) which are used to verify profile delivery server should preferably already be stored in the eUICC during its production. In particular, if a certain CA certificate is missing on the eUICC, in-the-field updates of eUICCs are difficult to manage and require a lot of effort in preparation.

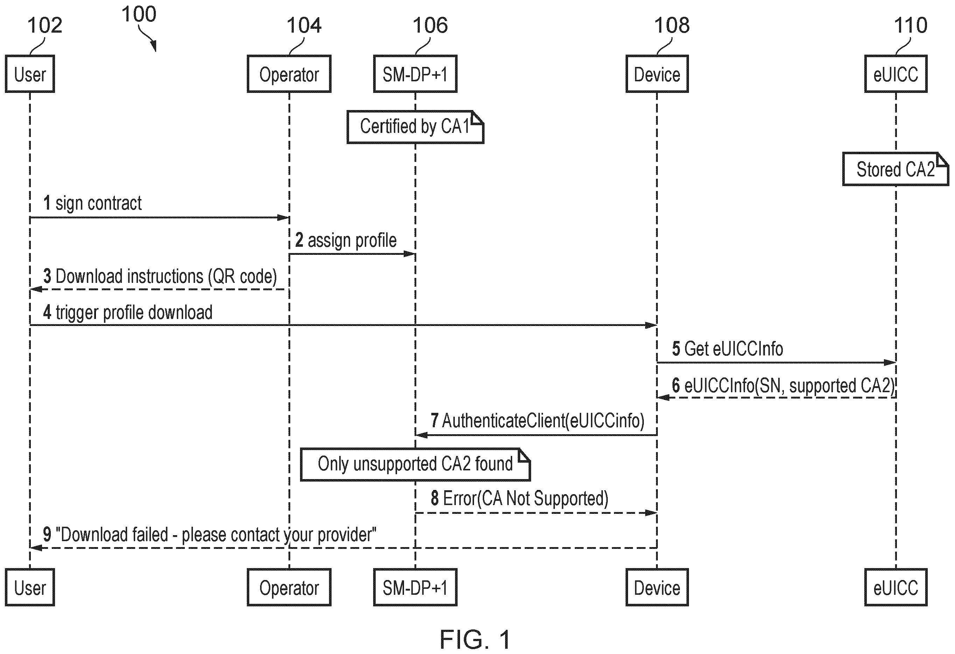

**Fig. 1** shows an example of a profile download authorization process 100. In particular, a typical authorization process is shown, which precedes the download of a profile to an eUICC 110 integrated into a user device 108. Since the authorization is based on a specific root certificate which is not present in the eUICC 110, the download results in a failure. It is noted that eUICCs are usually personalized with relevant data (e.g., root of trust, keys and certificates) during manufacturing in highly protected sites (i.e., security-certified sites). Furthermore, changes to those data items after issuance in the field is difficult, because it requires a high effort due to the individual keys and credentials of each eUICC and due to many entities that need to cooperate: the eUICC manufacturer (EUM) and its (usually offline) key store, the user device manufacturer, an online server communicating with the user device for data delivery and the user himself. A profile delivery server receiving requests for profile downloads is typically accredited by a Certificate Authority (CA), and is provided with a root certificate issued by said CA. Furthermore, an eUICC requesting a profile download should use this root certificate to authenticate the profile delivery server. However, the specific root certificate that should be used may not be available to the eUICC, for example because it was not known when eUICC was being manufactured. In that case the profile delivery server, even though accredited, cannot be authenticated by the eUICC and the profile download will fail.

Such a scenario is shown in Fig. 1, which reflects a typical profile download authorization process 100, for example as specified in the RSP Technical Specification, version 2.5, published by the GSMA on 26 May 2023. The process 100 contains the following steps. First, a user 102 signs a contract for mobile connectivity with an operator 104 of his choice. Then, the operator 104 instructs a profile delivery server 106 (SM-DP+ 1) associated with said operator 104 to prepare the profile download and to return download instructions (e.g., a QR code) to the user 102. Next, the user 102 starts the profile download on his device 108 (e.g., by scanning the QR code). Subsequently, an application executed on the device 108 obtains information about the eUICC 110 and the eUICC 110 returns the requested information. This information may include a serial number of the eUICC 110 and information about the root certificate stored in its memory. This information indicates that the eUICC 110 has a root certificate issued by a certificate authority (CA2) which is different from the certificate authority (CA1) that certified the profile delivery server 106. Then, the device application contacts the profile delivery server 106 and forwards the information about the eUICC 110 to said profile delivery server 106. Next, the profile delivery server 106 processes said information and concludes that the eUICC 110 will not be able to authenticate the profile delivery server 106, because it has root certificate which is different from its own root certificate. As a result, the profile delivery server 106 returns an error to the user device 108. Finally, the user device 108 informs the user 102 about the failed download.

Now are discussed a method for supporting a profile download, a corresponding first profile delivery server, and a corresponding system for supporting a profile download. In particular, said method, server and system facilitate a profile download in the sense that the risk of failed downloads due to authorization errors of the kind set forth above is reduced.

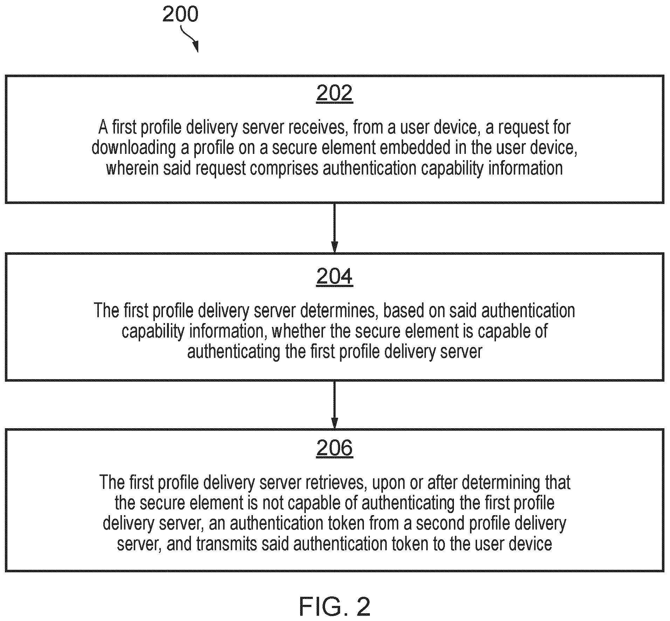

Fig. 2 shows an illustrative embodiment of a method 200 for supporting a profile download. The method 200 comprises the following steps. At 202, a first profile delivery server receives, from a user device, a request for downloading a profile on a secure element embedded in the user device, wherein said request comprises authentication capability information. Furthermore, at 204, the first profile delivery server determines, based on said authentication capability information, whether the secure element is capable of authenticating the first profile delivery server. Furthermore, at 206, the first profile delivery server retrieves, upon or after determining that the secure element is not capable of authenticating the first profile delivery server, an authentication token from a second profile delivery server, and transmits said authentication token to the user device. In this way, the risk of failed downloads due to authorization errors may be reduced. More specifically, even if the first profile delivery server itself cannot be authenticated by the secure element, the first profile delivery server may still be regarded as trustworthy, because it provides a verifiable authentication token obtained from the second profile delivery server to the secure element.

In one or more embodiments, the authentication capability information is indicative of a root certificate assigned to the secure element. In this way, the first profile delivery server may easily determine whether the secure element is capable of authenticating the first profile delivery server. Furthermore, in one or more embodiments, the authentication token comprises a root certificate assigned to the second profile delivery server. In this way, a suitable authentication token may be generated, in case the secure element is capable of authenticating the second profile delivery server. It is noted that the authentication token may also comprise other data which may be needed to authenticate the second profile delivery server. For example, in some authentication schemes sub-certificates may be used, so that a chain of certificates is used to authenticate the server. In that case, the authentication token may comprise all the data needed to authenticate the server, including the sub-certificates.

In one or more embodiments, the authentication token further comprises a signature computed by the second profile delivery server, wherein said signature has been computed over authentication data provided by the first profile delivery server. In this way, an additional authentication layer is provided, which increases the level of security. Furthermore, in one or more embodiments, the authentication token is based on a unique identifier of the profile. In this way, the profile download may be bound to a single process as well as single profile, which further increases the level of security.

In one or more embodiments, the secure element verifies the authentication token and approves, upon or after a successful verification of the authentication token, the download of the profile from the first profile delivery server. In this way, the download of the profile may easily be authorized. In a practical implementation, the first profile delivery server initiates, upon or after determining that the secure element is capable of authenticating the first profile delivery server, an authentication process that uses the root certificate assigned to the secure element. In a practical implementation, the secure element is an eUICC.

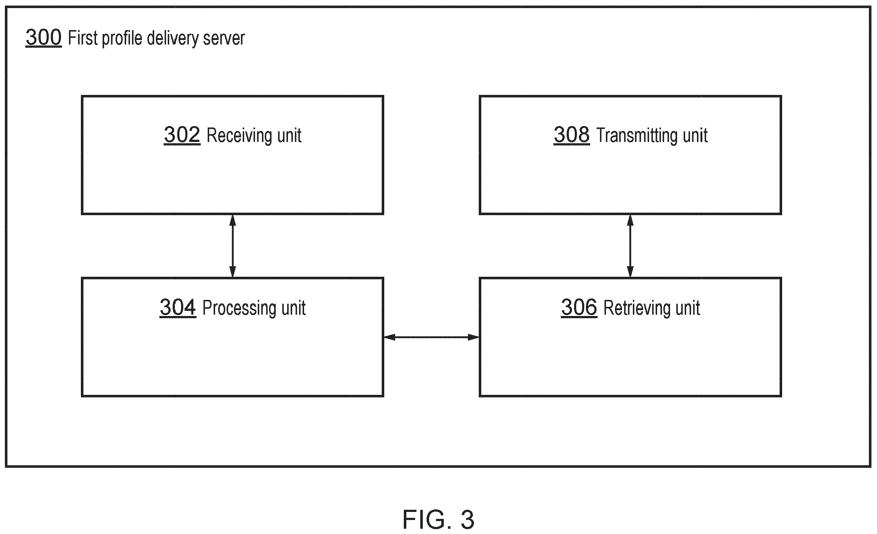

Fig. 3 shows an illustrative embodiment of a first profile delivery server 300. The first profile delivery server 300 comprises a receiving unit 302, processing unit 304, retrieving unit 306 and transmitting unit 308. The receiving unit 302 is configured to receive, from a user device (not shown), a request for downloading a profile on a secure element embedded in the user device, wherein said request comprises authentication capability information. Furthermore, the processing unit 304 is configured to determine, based on said authentication capability information, whether the secure element is capable of authenticating the first profile delivery server 300. Furthermore, the retrieving unit 306 is configured to retrieve, upon or after determining that the secure element is not capable of authenticating the first profile delivery server 300, an authentication token from a second profile delivery server (not shown). Furthermore, the transmitting unit 308 configured to transmit said authentication token to the user device. As explained with reference to the corresponding method shown in Fig. 2, the first profile delivery server 300 facilitates reducing the risk of failed downloads due to authorization errors. The skilled person will appreciate that, although the receiving unit 302, processing unit 304, retrieving unit 306 and transmitting unit 308 are shown as separate units, some or all of these units may be integrated into a single component of the first profile delivery server 300.

For example, the transmitting unit 308 and receiving unit 302 may be implemented as a single, combined unit, in the sense that the first profile delivery server 300 implements an application programming interface (API) based on a representational state transfer (REST) architecture (i.e., a so-called REST-API). In such an implementation, a REQUEST is sent to the REST-API, then processing is performed and a RESPONSE is sent back, again via the REST-API. In other words, in such an implementation a dedicated or separate transmitting unit is not needed. Thus, the terms "transmitting unit" and "transmit" as used herein should be interpreted broadly, in the sense that they also cover implementations in which the authentication token is sent back to the user device via the afore-mentioned REST-API, for example.

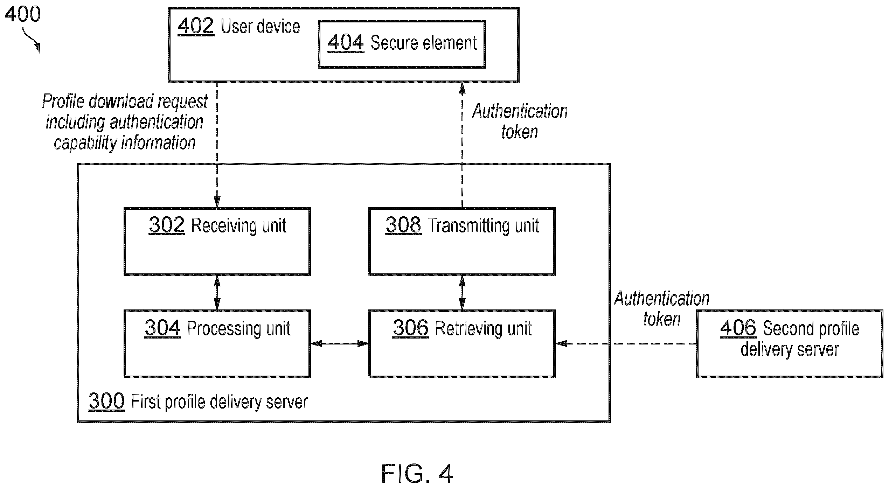

Fig. 4 shows an illustrative embodiment of a system for supporting a profile download. The system 400 comprises a first profile delivery server 300 as shown in Fig. 3, a user device 402 and a second profile delivery server 406. The user device 402 is configured to transmit a request for downloading a profile on a secure element 404 embedded in the user device 402, wherein said request comprises authentication capability information. As mentioned above, the processing unit 304 of the first profile delivery server 300 is configured to determine, based on said authentication capability information, whether the secure element 404 is capable of authenticating the first profile delivery server 300. Furthermore, the retrieving unit 306 is configured to retrieve, upon or after determining that the secure element 404 is not capable of authenticating the first profile delivery server 300, an authentication token from a second profile delivery server 406. Furthermore, the transmitting unit 308 configured to transmit said authentication token to the user device 402. As explained with reference to the corresponding method shown in Fig. 2 and the first profile delivery server 300 shown in Fig. 3, the system 400 facilitates reducing the risk of failed downloads due to authorization errors.

In accordance with the present disclosure, a first profile delivery server 300, which is contacted by a user device 402 for a profile download, may establish trust to at least one second profile delivery server 406, which is accredited by a CA whose root certificate is stored on the secure element 404 of the user device 402. Then, in response to the profile download request, the first profile delivery server 300 detects that the secure element 404 will not be able to authenticate the first profile delivery server 300, based on information provided by the secure element 404. Furthermore, the first profile delivery server 300 detects that the secure element 404 will be able to authenticate the second profile delivery server 406. Therefore, the first profile delivery server 300 requests an authentication token from the second profile delivery server 406, for example a signature calculated by the second profile delivery server 406 over authentication data provided by the first profile delivery server 300, together with the root certificate of the second profile delivery server 406 (issued by a CA known to the secure element 404). Then, the first profile delivery server 300 sends the authentication token as well as additional data for authenticating the first profile delivery server 300 back to the secure element 404. Next, the secure element 404 may verify the authentication token using the root certificate stored in its memory. Furthermore, it may verify the additional authentication data provided by the first profile delivery server 300, as specified in the afore-mentioned technical specification of the GSMA. Accordingly, a trust chain towards a CA known to the secure element 404 has been established and verified and the first profile delivery server 300 and the secure element 404 may proceed with the profile download, as is also specified in said technical specification of the GSMA.

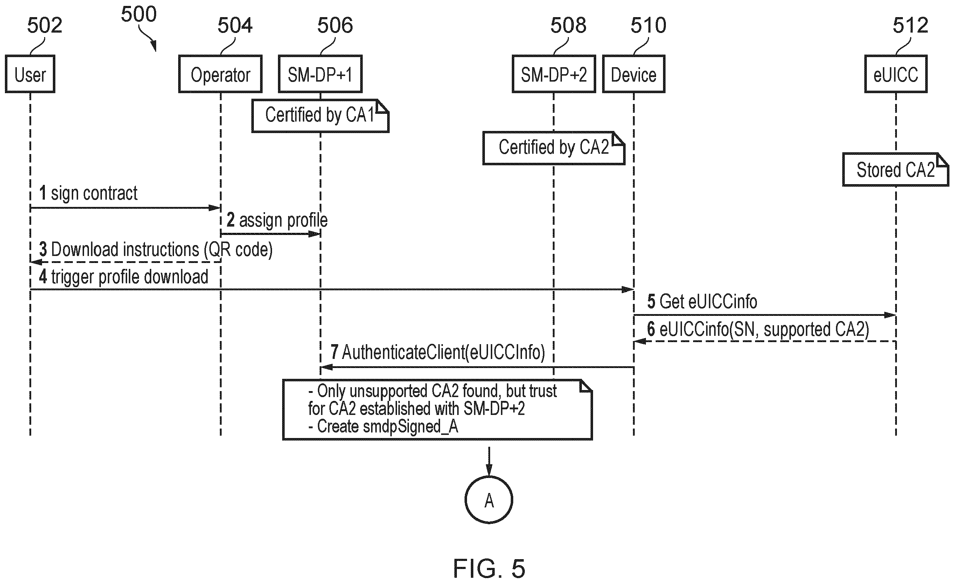

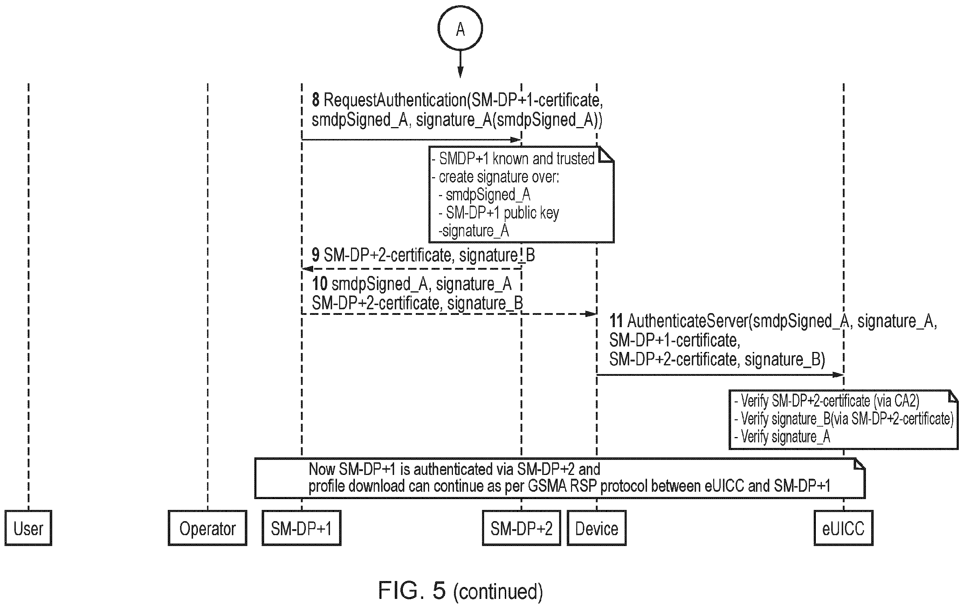

**Fig. 5** shows an illustrative embodiment of a profile download authorization process 500. In particular, an example of an profile download authorization process 500 in accordance with the present disclosure is shown, which precedes the download of a profile to an eUICC 512 integrated into a user device 510. The process 500 contains the following steps. First, a user 502 signs a contract for mobile connectivity with an operator 504 of his choice. Then, the operator 504 instructs a first profile delivery server 506 (SM-DP+ 1) associated with said operator 504 to prepare the profile download and to return download instructions (e.g., a QR code) to the user 502. Next, the user 502 starts the profile download on his device 510 (e.g., by scanning the QR code). Subsequently, an application executed on the device 510 obtains information about the eUICC 512 and the eUICC 512 returns the requested information. This information may include a serial number of the eUICC 512 and information about the root certificate stored in its memory. This information indicates that the eUICC 512 has a root certificate issued by a certificate authority (CA2) which is different from the certificate authority (CA1) that certified the first profile delivery server 506. In particular, the information indicates that the eUICC 512 has a root certificate issued by a certificate authority (CA2) associated with a second profile delivery server 508 (SM-DP+ 2). Then, the device application contacts the first profile delivery server 506 and forwards the information about the eUICC 512 to said first profile delivery server 506. Next, the first profile delivery server 506 processes said information and concludes that the eUICC 512 will not be able to authenticate the first profile delivery server 506, but the second profile delivery server 508.

At this stage of the process 500, the first profile delivery server 506 requests the second profile delivery server 508 to generate an authentication token comprising enough download-session-dependent input data to generate signature_B. Next, the second profile delivery server 508 returns its own certificate (signed by CA2) and signature_B. Subsequently, the first profile delivery server 506 returns all needed data to the user device 510, which forwards these data to the eUICC 512 integrated into said user device 510. The eUICC 512 can then verify signature_B (via the CA2 root certificate and the certificate of the second profile delivery server 508) and signature_A (via the certificate of the first profile delivery server 506). Upon a successful verification, the profile download can continue between the first profile delivery server 506 and the eUICC 512 without further involvement of the second profile delivery server 508. It is noted that in case the authentication token is also based on a unique identifier of the profile (i.e., a so-called "ICCID"), then step 7 shown in Fig. 5 would include an ICCID smdpSigned A data field, the eUICC 512 would need to store the ICCID in step 11, and the eUICC 512 would need to check it again later in the profile download process once the actual profile data is received.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE NUMBERS

- 100: profile download authorization process
- 102: user
- 104: operator
- 106: profile delivery server (SM-DP+ 1)
- 108: user device
- 110: embedded universal integrated circuit card (eUICC)
- 200: method for supporting a profile download
- 202: a first profile delivery server receives, from a user device, a request for downloading a profile on a secure element embedded in the user device, wherein said request comprises authentication capability information
- 204: the first profile delivery server determines, based on said authentication capability information, whether the secure element is capable of authenticating the first profile delivery server
- 206: the first profile delivery server retrieves, upon or after determining that the secure element is not capable of authenticating the first profile delivery server, an authentication token from a second profile delivery server, and transmits said authentication token to the user device
- 300: first profile delivery server
- 302: receiving unit
- 304: processing unit
- 306: retrieving unit
- 308: transmitting unit
- 400: system for supporting a profile download
- 402: user device
- 404: secure element
- 406: second profile delivery server
- 500: profile download authorization process
- 502: user
- 504: operator
- 506: first profile delivery server (SM-DP+ 1)
- 508: second profile delivery server (SM-DP+ 2)
- 510: user device
- 512: embedded universal integrated circuit card (eUICC)

## Claims

1. A method for supporting a profile download, comprising that:
a first profile delivery server receives, from a user device, a request for downloading a profile on a secure element embedded in the user device, wherein said request comprises authentication capability information;
the first profile delivery server determines, based on said authentication capability information, whether the secure element is capable of authenticating the first profile delivery server;
the first profile delivery server retrieves, upon or after determining that the secure element is not capable of authenticating the first profile delivery server, an authentication token from a second profile delivery server, and transmits said authentication token to the user device.

2. The method of claim 1, wherein the authentication capability information is indicative of a root certificate assigned to the secure element.

3. The method of claim 1 or 2, wherein the authentication token comprises a root certificate assigned to the second profile delivery server.

4. The method of claim 3, wherein the authentication token further comprises a signature computed by the second profile delivery server, wherein said signature has been computed over authentication data provided by the first profile delivery server.

5. The method of claim 3 or 4, wherein the authentication token is based on a unique identifier of the profile.

6. The method of any preceding claim, wherein the secure element verifies the authentication token and approves, upon or after a successful verification of the authentication token, the download of the profile from the first profile delivery server.

7. The method of any preceding claim, wherein the first profile delivery server initiates, upon or after determining that the secure element is capable of authenticating the first profile delivery server, an authentication process that uses the root certificate assigned to the secure element.

8. The method of any preceding claim, wherein the secure element is an embedded universal integrated circuit card, eUICC.

9. A first profile delivery server, comprising:
a receiving unit configured to receive, from a user device, a request for downloading a profile on a secure element embedded in the user device, wherein said request comprises authentication capability information;
a processing unit configured to determine, based on said authentication capability information, whether the secure element is capable of authenticating the first profile delivery server;
a retrieving unit configured to retrieve, upon or after determining that the secure element is not capable of authenticating the first profile delivery server, an authentication token from a second profile delivery server;
a transmitting unit configured to transmit said authentication token to the user device.

10. The first profile delivery server of claim 9, wherein the authentication capability information is indicative of a root certificate assigned to the secure element.

11. The first profile delivery server of claim 9 or 10, wherein the authentication token comprises a root certificate assigned to the second profile delivery server.

12. The first profile delivery server of claim 11, wherein the authentication token further comprises a signature computed by the second profile delivery server, wherein said signature has been computed over authentication data provided by the first profile delivery server.

13. The first profile delivery server of claim 11 or 12, wherein the authentication token is based on a unique identifier of the profile.

14. A system for supporting a profile download, comprising the first profile delivery server of any one of claims 9 to 13, the second profile delivery server and the user device.

15. The system of claim 14, wherein the secure element embedded in the user device is configured to verify the authentication token and to approve, upon or after a successful verification of the authentication token, the download of the profile from the first profile delivery server.

## Amended claims

### Amended claims in accordance with Rule 137(2) EPC.

1. A method (200) for supporting a profile download, comprising that:
a first profile delivery server receives (202), from a user device, a request for downloading a profile on a secure element embedded in the user device, wherein said request comprises authentication capability information;
the first profile delivery server determines (204), based on said authentication capability information, whether the secure element is capable of authenticating the first profile delivery server;
the first profile delivery server retrieves (206), upon or after determining that the secure element is not capable of authenticating the first profile delivery server, an authentication token from a second profile delivery server, and transmits said authentication token to the user device;
wherein the secure element verifies the authentication token and approves, upon or after a successful verification of the authentication token, the download of the profile from the first profile delivery server.

2. The method (200) of claim 1, wherein the authentication capability information is indicative of a root certificate assigned to the secure element.

3. The method (200) of claim 1 or 2, wherein the authentication token comprises a root certificate assigned to the second profile delivery server.

4. The method (200) of claim 3, wherein the authentication token further comprises a signature computed by the second profile delivery server, wherein said signature has been computed over authentication data provided by the first profile delivery server.

5. The method (200) of claim 3 or 4, wherein the authentication token is based on a unique identifier of the profile.

6. The method (200) of any preceding claim, wherein the first profile delivery server initiates, upon or after determining that the secure element is capable of authenticating the first profile delivery server, an authentication process that uses the root certificate assigned to the secure element.

7. The method (200) of any preceding claim, wherein the secure element is an embedded universal integrated circuit card, eUICC.

8. A system (400) for supporting a profile download, the system (400) comprising a first profile delivery server (300), a second profile delivery server (406) and a user device (402), wherein the first profile delivery server (300) comprises:
a receiving unit (302) configured to receive, from the user device (402), a request for downloading a profile on a secure element (404) embedded in the user device (402), wherein said request comprises authentication capability information;
a processing unit (304) configured to determine, based on said authentication capability information, whether the secure element (404) is capable of authenticating the first profile delivery server (300);
a retrieving unit (306) configured to retrieve, upon or after determining that the secure element (404) is not capable of authenticating the first profile delivery server (300), an authentication token from the second profile delivery server (406);
a transmitting unit (308) configured to transmit said authentication token to the user device (402);
wherein the secure element (404) embedded in the user device (402) is configured to verify the authentication token and to approve, upon or after a successful verification of the authentication token, the download of the profile from the first profile delivery server (300).

9. The system (400) of claim 8, wherein the authentication capability information is indicative of a root certificate assigned to the secure element (404).

10. The system (400) of claim 8 or 9, wherein the authentication token comprises a root certificate assigned to the second profile delivery server (406).

11. The system (400) of claim 10, wherein the authentication token further comprises a signature computed by the second profile delivery server (406), wherein said signature has been computed over authentication data provided by the first profile delivery server (300).

12. The system (400) of claim 10 or 11, wherein the authentication token is based on a unique identifier of the profile.
